# EUROPEAN PATENT APPLICATION

(11) **EP 4 539 418 A1**
(43) Date of publication of application: **16.04.2025**
(21) Application number: 22949744.1
(22) Date of filing: 05.07.2022
(51) Int. Cl.: H04L 41/14

(54) **COMMUNICATION METHOD, AND APPARATUS**

(71) Applicant: Huawei Technologies Co., Ltd., Shenzhen, Guangdong 518129 (CN)
(72) Inventor: WANG, Fei, Shenzhen, Guangdong 518129 (CN); PENG, Chenghui, Shenzhen, Guangdong 518129 (CN); LU, Jiaxun, Shenzhen, Guangdong 518129 (CN); WU, Jianjun, Shenzhen, Guangdong 518129 (CN)
(74) Representative: Körber, Martin Hans
(86) International application number: PCT/CN2022/103941
(87) International publication number: WO 2024/007156

(57) **Abstract**

This application discloses a communication method and apparatus. The method includes: A first network element determines first feature data of a target network event. The first network element receives first information from a second network element, where the first information includes information about the target network event and second feature data of the target network event (S404B). The first network element executes the target network event by using a first function model, where the first function model is obtained by the first network element based on the first feature data and the second feature data (S405B). According to the method, when data privacy security of the second network element is ensured, the first network element may obtain an accurate first function model based on data and information of the second network element, and the first network element executes the target network event by using the first function model, thereby improving execution accuracy.

## Description

### TECHNICAL FIELD

This application relates to the field of communication technologies, and in particular, to a communication method and apparatus.

### BACKGROUND

With the development of communication technologies, intelligentization of more applications is to be implemented by using artificial intelligence (artificial intelligence, AI). For example, in the 5th generation mobile communication (5th generation mobile communication, 5G) network protocol R16 (release 16), a network data analytics function (network data analytics function, NWDAF) starts to be researched for a core network (core network, CN) to support an AI function of a network. Application of the AI function usually includes two processes: AI model training and AI model inference. A purpose of the AI model training is to obtain one or more AI models, and a purpose of the AI model inference is to apply a trained AI model to new data to obtain a prediction result or an evaluation result.

Generally, network elements (or nodes) at different layers in a network have different data and information resources. A network element at an upper layer has global data and information, and a network element at a lower layer has local data and information. However, an existing AI-related technical solution supports only a single network element (or node) to use data and information resources owned by the network element (or node) to train an AI model (namely, a function model), and cannot make full use of data and information resources of the upper-layer network element (or node). As a result, accuracy of an AI model obtained through training is low. However, if different network elements (or nodes) directly provide and transmit respective original data to each other, data security cannot be ensured.

Therefore, a communication method needs to be urgently provided, so that data security is ensured and different network elements interact with each other to obtain a function model with high accuracy.

### SUMMARY

A communication method and apparatus are provided, so that data security is ensured and different network elements interact with each other to obtain a function model with high accuracy.

According to a first aspect, this application provides a communication method. The method may be performed by a first network element, or may be performed by a component (for example, a processor, a chip, or a chip system) of the first network element. This is not specifically limited in this application. The method may specifically include the following steps: A first network element determines first feature data of a target network event; the first network element receives first information from a second network element, where the first information includes information about the target network event and second feature data of the target network event; and the first network element executes the target network event by using a first function model, where the first function model is obtained by the first network element based on the first feature data and the second feature data.

In the solution of this application, the first network element determines the first feature data (namely, local feature data) of the target network event, and then the first network element receives the first information from the second network element. The first information includes the information about the target network event and the second feature data of the target network event. Further, the first network element may obtain the first function model based on the first feature data and the second feature data provided by the second network element. In this solution, when data security of the second network element is ensured, the first network element may effectively use the second feature data of the target network event provided by the second network element, obtain the first function model with high accuracy based on the local feature data of the target network event, thereby improving accuracy of executing the target network event by using the first function model.

In a possible implementation, before the first network element receives the first information from the second network element, the method further includes: The first network element sends a first request message to the second network element, where the first request message is used to request the second feature data of the target network event.

In this implementation, the first network element that needs to obtain the first function model can effectively request the required second feature data from the second network element for the target network event.

In a possible implementation, the first request message includes the information about the target network event, and the information about the target network event includes identification information of the target network event, and further includes one or more of a target dimension, a response delay, data accuracy, and quality of service QoS of the target network event in feature data of the target network event.

In this implementation, the second network element may accurately learn, based on the first request message, the information about the target network event and requirement information for requesting the feature data of the target network event by the first network element.

In a possible implementation, the method further includes: The first network element receives a first response message from the second network element, where the first response message is used to notify the first network element that the second network element provides the second feature data of the target network event.

In this implementation, the first network element receives the first response message from the second network element, to learn that the second network element accepts the request of the first network element, and determine that the second network element can provide the second feature data of the target network event.

In a possible implementation, the first information further includes the first response message.

In this implementation, an additional resource overhead and delay generated when the second network element separately sends the first response message and the first information to the second network element can be avoided.

In a possible implementation, that a first network element determines first feature data of a target network event includes: The first network element obtains a first dataset of the target network event; and the first network element performs feature extraction on the first dataset by using a first feature extraction model, to obtain the first feature data, where the first feature extraction model is used by the first network element to extract feature data of the target network event.

In this implementation, the first network element performs effective feature extraction on the first dataset (that is, a local dataset) of the target network event by using the first feature extraction model (that is, a local feature extraction model), to obtain the first feature data.

In a possible implementation, the first information further includes a first indication, and the first indication indicates the first network element whether to return an adjustment amount of the second feature data.

In this implementation, the second network element may further notify, through the first indication, the first network element whether to update a second feature extraction model, to indicate the first network element to return the adjustment amount of the second feature data, so that the second network element can effectively adjust the second feature extraction model based on the adjustment amount of the second feature data, thereby improving accuracy of the second feature extraction model.

In a possible implementation, the method further includes: The first network element obtains sample data of the target network event, where the sample data includes a feature data sample and a real value of the target network event; the first network element inputs the feature data sample into the first function model, to obtain an output value of the target network event; and the first network element obtains the adjustment amount of the second feature data based on the output value of the target network event and the real value of the target network event, where the adjustment amount of the second feature data is used to adjust an output layer of the second feature extraction model of the second network element.

In this implementation, the first network element can effectively obtain the adjustment amount of the second feature data, so that the second network element can adjust the output layer of the second feature extraction model of the second network element based on the amount of the second feature data, and can further adjust another layer of the second feature extraction model, without the need for the first network element to feed back an adjustment amount of the another layer of the second feature extraction model to the second network element a plurality of times, thereby reducing resource overheads and a delay for updating the second feature extraction model.

In a possible implementation, when the first indication indicates the first network element to return the adjustment amount of the second feature data, the method further includes: The first network element sends the adjustment amount of the second feature data to the second network element according to the first indication.

In this implementation, when the second network element feeds back the first indication in the first information to the first network element, to indicate the first network element to return the adjustment amount of the second feature data, the first network element can further effectively feed back the adjustment amount of the second feature data to the second network element, so that the second network element can accurately and effectively adjust the second feature extraction model based on the adjustment amount of the second feature data.

According to a second aspect, this application provides a communication method. The method may be performed by a second network element, or may be performed by a component (for example, a processor, a chip, or a chip system) of the second network element. This is not specifically limited in this application. The method may specifically include the following steps: A second network element determines second feature data of a target network event; and the second network element sends first information to a first network element, where the first information includes information about the target network event and the second feature data of the target network event.

In the solution of this application, the second network element determines the second feature data for the target network event, and then sends the first information to the first network element, where the first information carries the information about the target network event and the second feature data, so that data security of the second network element is ensured and the first network element can obtain a first function model with higher accuracy based on the second feature data provided by the second network element.

In a possible implementation, before the second network element determines the second feature data of the target network event, the method further includes: The second network element receives a first request message from the first network element, where the first request message is used to request the second feature data of the target network event.

In this implementation, the second network element receives the first request message sent by the first network element, to determine the target network event, and effectively provide the second feature data of the target network event.

In a possible implementation, the first request message includes the information about the target network event, and the information about the target network event includes identification information of the target network event, and further includes one or more of a target dimension, a response delay, data accuracy, and quality of service QoS of the target network event in feature data of the target network event.

In this implementation, the second network element may accurately learn, based on the first request message, the information about the target network event and requirement information for requesting the feature data of the target network event by the first network element.

In a possible implementation, the method further includes: The second network element sends a first response message to the first network element, where the first response message is used to notify the first network element that the second network element provides the second feature data of the target network event.

In this implementation, the second network element may effectively notify the first network element that the second feature data of the target network event can be provided, so that the first network element determines that a first function model can be obtained based on the second feature data provided by the second network element.

In a possible implementation, the first information further includes the first response message.

In this implementation, an additional resource overhead and delay generated when the second network element feeds back the first information and the first response message to the first network element can be avoided.

In a possible implementation, that a second network element determines second feature data of a target network event includes: The second network element obtains a second dataset of the target network event; and the second network element performs feature extraction on the second dataset by using a second feature extraction model, to obtain the second feature data, where the second feature extraction model is used by the second network element to extract feature data of the target network event.

In this implementation, the second network element may perform feature extraction on the second dataset of the target network event by using the second feature extraction model (that is, a local feature extraction model), to effectively obtain the feature data of the target network event.

In a possible implementation, the first information further includes a first indication, and the first indication indicates the first network element whether to return an adjustment amount of the second feature data.

In this implementation, whether the first network element needs to feed back the adjustment amount of the second feature data to the second network element can be effectively indicated.

In a possible implementation, when the first indication indicates the first network element to return the adjustment amount of the second feature data, the method further includes: The second network element receives the adjustment amount of the second feature data from the first network element.

In this implementation, when the first indication indicates the first network element to return the adjustment amount of the second feature data, the second network element may further effectively receive the adjustment amount of the second feature data from the first network element, to optimize the second feature extraction model.

In a possible implementation, the method further includes: The second network element adjusts an output layer of the second feature extraction model of the second network element based on the adjustment mount of the second feature data.

In this implementation, the first network element feeds back, to the second network element, only an adjustment mount used to adjust the output layer of the second feature extraction model. The second network element may effectively adjust the output layer of the second feature extraction model of the second network element based on the adjustment mount of the second feature data, and may further adjust another layer of the second feature extraction model, to improve accuracy of the second feature extraction model.

According to a third aspect, an embodiment of this application provides a communication apparatus. The communication apparatus may be used in a first network element, and has a function of implementing the first aspect or any possible implementation of the first aspect. The apparatus may include a communication unit (where the communication unit includes a sending unit and/or a receiving unit) and a processing unit.

According to a fourth aspect, an embodiment of this application provides a communication apparatus. The communication apparatus may be used in a second network element, and has a function of implementing the first aspect or any possible implementation of the second aspect. The apparatus may include a communication unit (where the communication unit includes a sending unit and/or a receiving unit) and a processing unit.

According to a fifth aspect, this application further provides a communication apparatus. The communication apparatus may be used in a first network element, and the communication apparatus includes a processor, configured to implement a function in the first aspect or any possible implementation of the first aspect. Optionally, the communication apparatus further includes a transceiver, configured to implement a communication function of the communication apparatus.

According to a sixth aspect, this application further provides a communication apparatus. The communication apparatus may be used in a second network element, and the communication apparatus includes a processor, configured to implement a function of the method in the second aspect or any possible design of the second aspect. Optionally, the communication apparatus further includes a transceiver, configured to implement a communication function of the communication apparatus.

According to a seventh aspect, this application further provides a communication system. The system includes a first network element configured to perform the method provided in the first aspect, and a second network element configured to perform the method provided in the second aspect.

According to an eighth aspect, an embodiment of this application further provides a computer storage medium. The storage medium stores a software program. When the software program is read and executed by one or more processors, the method provided in the first aspect or any possible implementation of the first aspect may be implemented, or the method provided in the second aspect or any possible implementation of the second aspect may be implemented.

According to a ninth aspect, an embodiment of this application further provides a computer program product including instructions. When the computer program product runs on a computer, the method provided in the first aspect or any possible implementation of the first aspect is performed, or the method provided in the second aspect or any possible implementation of the second aspect is performed.

According to a tenth aspect, an embodiment of this application further provides a chip system. The chip system includes a processor, configured to support a first network element in implementing the function in the first aspect, or configured to support a second network element in implementing the function in the second aspect.

In a possible design, the chip system further includes a memory. The memory is configured to store necessary program instructions and data to be executed by a loading apparatus. The chip system may include a chip, or may include a chip and another discrete device.

For technical effects that can be achieved in the third aspect, the fifth aspect, and any possible implementation of the third aspect and the fifth aspect, refer to the first aspect, the second aspect, and any possible implementation of the first aspect and the second aspect, and for technical effects that can be achieved in the third aspect, the sixth aspect, and any possible implementation of the third aspect and the sixth aspect, refer to the second aspect, the second aspect, and any possible implementation of the second aspect and the second aspect. Details are not described herein again.

### BRIEF DESCRIPTION OF DRAWINGS

FIG. 1 is a schematic of a reference architecture for data collection and reporting;
FIG. 2 is a schematic of a network architecture to which a communication method according to an embodiment of this application is applicable;
FIG. 3 is a diagram of a communication system to which a communication method according to an embodiment of this application is applicable;
FIG. 4A is a schematic of a structure of a communication method according to an embodiment of this application;
FIG. 4B is a schematic flowchart of a communication method according to an embodiment of this application;
FIG. 5A is a schematic of a structure of Embodiment 1 according to an embodiment of this application;
FIG. 5B is a schematic flowchart of Embodiment 1 according to an embodiment of this application;
FIG. 6A is a schematic of a structure of Embodiment 2 according to an embodiment of this application;
FIG. 6B is a schematic flowchart of Embodiment 2 according to an embodiment of this application;
FIG. 7A is a schematic of a structure of Embodiment 3 according to an embodiment of this application;
FIG. 7B is a schematic flowchart of Embodiment 3 according to an embodiment of this application;
FIG. 8 is a schematic of a structure of a communication apparatus according to an embodiment of this application;
FIG. 9 is a schematic of a structure of a communication apparatus according to an embodiment of this application; and
FIG. 10 is a schematic of a structure of a chip apparatus according to an embodiment of this application.

### DESCRIPTION OF EMBODIMENTS

Embodiments of this application provide a communication method and apparatus. The method and apparatus are based on a same or similar technical concept. Because the method and apparatus have a similar problem-resolving principle, mutual reference may be made to implementations of the method and apparatus. Repeated parts are not described again.

With the development of communication technologies, intelligentization of more applications is to be implemented by using artificial intelligence (artificial intelligence, AI). For example, in the 5G network protocol R16, a network data analytics function NWDAF starts to be researched for a core network CN to support an AI function of a network. Application of the AI function usually includes two processes: AI model training and AI model inference. A purpose of the AI model training is to obtain one or more AI models, and a purpose of the AI model inference is to apply a trained AI model to new data to obtain a prediction result or an evaluation result.

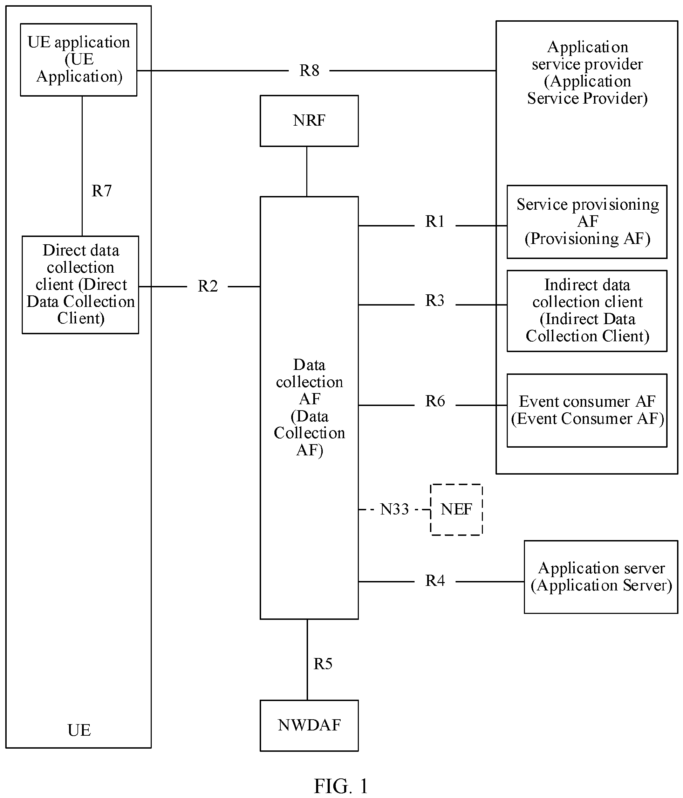

FIG. 1 is a schematic of a reference architecture for data collection and reporting defined in the R17 protocol. UE-side data may be quality of experience (quality of experience, QoE) of a service in a UE or other data. This is not limited herein. The UE-side data may be data obtained by the UE. The UE-side data may also be referred to as data on a UE side, data of the UE, or UE data (UE data).

The following briefly describes each network element (or node) in the architecture shown in FIG. 1.

A data collection AF (data collection AF, DCAF) may receive configuration information that is used to configure a data collection and reporting function and that is from an application service provider (application service provider, ASP). For example, a network side may interact with the DCAF by using a service provisioning AF (Provisioning AF) in the ASP, and enable a data collection and reporting function of the DCAF. Then, the DCAF may generate data collection and reporting configuration information, and send the data collection and reporting configuration information to a data collection client side, so that the data collection client collects data and reports a data collection report based on the received data collection and reporting configuration information. The DCAF may further receive the data collection report reported by the data collection client.

The data collection client may include: a direct data collection client (direct data collection client, DDCC), an indirect data collection client (indirect data collection client, IDCC), or an application server (application server, AS). The DCAF may process data in the data collection report, and send processed UE-side data to a subscription network element or a third-party entity based on a subscription request of another network element or the third-party entity. The DDCC is a data collection function entity in a UE. The DDCC can receive the data collection and reporting configuration information from the DCAF through an R2 interface, and perform data collection and reporting based on the data collection and reporting configuration information. A UE application (Application, APP) can share related UE-side data with the DDCC through an R7 interface. The application service provider (ASP) can receive the UE-side data from the UE application through an R8 interface. The R8 interface is an implementation only at an application layer. An indirect data collection client (IDCC) may be considered to exist in the ASP. The service provisioning AF sends a data collection report to the DCAF through an R1 interface, and the IDCC sends UE-side data collected through the application layer to the DCAF through an R3 interface. Before that, the IDCC also receives the data collection and reporting configuration information from the DCAF through the R3 interface. An application server (AS) may receive the data collection and reporting configuration information from the DCAF through an R4 interface, collect data based on the data collection and reporting configuration information to obtain a data collection report, and send the data collection report to the DCAF through the R4 interface. The data collection report includes access log information of the application server. An NWDAF may subscribe to the DCAF and receive UE-side data through an R5 interface, and then analyzes the UE-side data. The ASP may also obtain data collected by the DCAF. For example, an event consumer AF (Event Consumer, AF) in the ASP may subscribe to collected data from the DCAF through an R6 interface, and receive subscribed data information from the DCAF.

However, when the foregoing NWDAF collects and analyzes data at the application layer to implement an AI function of a network for data collection, because network elements (or nodes) at different layers in the network have different data and information resources, a network element at an upper layer has global data and information, and a network element at a lower layer has local data and information. However, an existing AI-related technical solution supports only a single network element (or node) in using data and information resources owned by the network element (or node) to train an AI model (namely, a function model), and cannot make full use of data and information resources of another network element (or node). As a result, accuracy of an AI model obtained through training is low. In addition, if different network elements (or nodes) can directly provide and transmit respective original data to each other, data security cannot be ensured.

Therefore, this application provides a communication method. The method includes: A first network element determines first feature data of a target network event; the first network element receives first information from a second network element, where the first information includes information about the target network event and second feature data of the target network event; and the first network element executes the target network event by using a first function model, where the first function model is obtained by the first network element based on the first feature data and the second feature data. According to the method, when data privacy security of the second network element is ensured, the first network element may obtain an accurate first function model based on data and information of the second network element, and the first network element executes the target network event by using the first function model, thereby improving execution accuracy.

It should be noted that the solutions in this application are applicable to a 5G communication system, a 6G communication system to be applied, a future evolved communication system, another communication system, or the like. This is not limited in this application. A scenario in embodiments of this application is in a background of signal transmission.

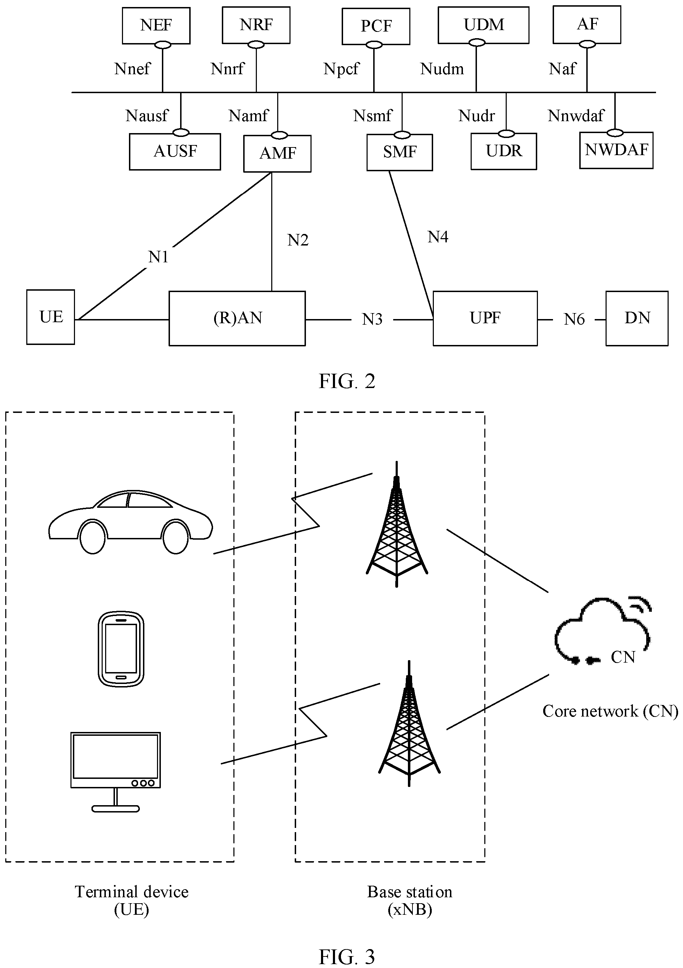

FIG. 2 is a schematic of a network architecture to which a communication method according to an embodiment of this application is applicable. As shown in FIG. 2, the network architecture may include an access network and a core network. A terminal device accesses a data network (data network, DN) through the access network and the core network.

The terminal device may be user equipment (user equipment, UE), a mobile station, a mobile terminal, an application client, or the like. The terminal device may be widely used in various scenarios, for example, device-to-device (device-to-device, D2D), vehicle to everything (vehicle to everything, V2X) communication, machine-type communication (machine-type communication, MTC), Internet of things (Internet of things, IOT), virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an urban air transportation vehicle (like an uncrewed aerial vehicle or a helicopter), a ship, a robot, a mechanical arm, a smart home device, or the like. In the accompanying drawings and the following embodiments of this application, a UE is used as an example of the terminal device for description. A UE that appears in any subsequent place may alternatively be replaced with the terminal device or another example of the terminal device.

The access network is used to implement an access-related function, may provide a network access function for an authorized user in a specific area, and can determine transmission links with different quality based on a user level, a service requirement, and the like, to transmit user data. The access network forwards a control signal and user data between the UE and the core network. The access network may include an access network device. The access network device may be a device that provides access for the UE, and may include a radio access network (radio access network, RAN) device and a wired access network device. The RAN device is mainly responsible for functions such as radio resource management, quality of service (quality of service, QoS) management, and data compression and encryption on an air interface side. The RAN device may include base stations in various forms, for example, a macro base station, a micro base station (which may also be referred to as a small cell), a relay station, an access point, and a balloon station. In systems using different radio access technologies, names of a device having a base station function may be different. For example, in a 5G system, the device is referred to as a RAN or a next-generation NodeB (next-generation Node base station, gNB). In a long term evolution (long term evolution, LTE) system, the device is referred to as an evolved NodeB (evolved NodeB, eNB or eNodeB).

The access network device and the UE may be at a fixed location, or may be mobile. The access network device and the UE may be deployed on land, where the deployment includes indoor, outdoor, handheld, or vehicle-mounted deployment; may be deployed on a water surface; or may be deployed on an airplane, a balloon, or an artificial satellite in the air. An application scenario of the access network device and the UE is not limited in embodiments of this application.

The core network is responsible for maintaining subscription data of a mobile network, and provides session management, mobility management, policy management, security authentication, and another function for the UE. The core network includes but is not limited to one or more of the following network elements: an application function (application function, AF) network element, a unified data management (unified data management, UDM) network element, a unified data repository (unified data repository, UDR) network element, a policy control function (policy control function, PCF) network element, a session management function (session management function, SMF) network element, an access and mobility management function (access and mobility management function, AMF) network element, a network repository function (network repository function, NRF) network element, an authentication server function (authentication server function, AUSF) network element, a network exposure function (network exposure function, NEF) network element, a user plane function (user plane function, UPF) network element, and a network data analytics function (Network Data Analytics Function, NWDAF) network element.

The AMF network element is mainly responsible for mobility management in a mobile network, for example, user registration with a network and user switching. The SMF network element is mainly responsible for session management in the mobile network, such as session establishment, modification, and release. The UPF network element is mainly responsible for forwarding and receiving user data, and may receive user data from a data network, and transmit the user data to the UE via the access network device; or may receive user data from the UE via the access network device, and forward the user data to the data network. The UDM network element includes functions such as performing of subscription data management, and user access authorization. The UDR network element includes functions such as storage and retrieval of subscription data, policy data, application data, and other types of data. The NEF network element is mainly configured for capability supporting and event exposure. The AF network element transfers a requirement of an application side on a network side. The PCF network element mainly supports providing a unified policy framework to control a network behavior, and providing a policy rule for a control layer network function, and is responsible for obtaining user subscription information related to policy decision. The PCF network element may provide a policy and the like for the AMF network element and the SMF network element. The NRF network element may be configured to provide a network element discovery function, provide network element information corresponding to a network element type based on a request of another network element, provide a network element management service, and the like. The AUSF network element is responsible for performing authentication on the UE and verifying validity of the UE. The NWDAF network element provides network data collection and analysis functions based on technologies such as big data and artificial intelligence. A plurality of services may be deployed on the DN, and a service such as data and/or voice may be provided by the DN for the UE.

The AF network element, the UDM network element, the UDR network element, the PCF network element, the SMF network element, the AMF network element, the NRF network element, the AUSF network element, the NEF network element, the UPF network element, and the NWDAF network element may also be respectively referred to as an AF, a UDM, a UDR, a PCF, an SMF, an AMF, an NRF, an AUSF, an NEF, a UPF and an NWDAF for short, as shown in FIG. 1.

In FIG. 2, Nausf, Nnef, Nnrf, Namf, Npcf, Nsmf, Nudm, Nudr, Naf, and Nnwdaf are service-based interfaces provided by the AUSF, the NEF, the NRF, the AMF, the PCF, the SMF, the UDM, the UDR, the AF, and the NWDAF respectively, and are configured to invoke corresponding service-based operations. N1, N2, N3, N4, and N6 are interface sequence numbers. Meanings of these interface sequence numbers are as follows.

N1: represents an interface between the AMF and the UE, and may be configured to transfer non-access stratum (non-access stratum, NAS) signaling (for example, including a QoS rule from the AMF) to the UE. N2: represents an interface between the AMF and the access network device, and may be configured to transfer radio bearer control information from a core network side to the access network device, and the like. N3: represents an interface between the access network device and the UPF, and is mainly configured to transfer uplink and downlink user plane data between the access network device and the UPF. N4: represents an interface between the SMF and the UPF, and may be configured to transfer information between a control plane and a user plane, including delivery of a forwarding rule, a QoS rule, a traffic statistics rule, and the like from the control plane to the user plane, and information reporting of the user plane. N6: represents an interface between the UPF and the DN, and is configured to transfer uplink and downlink user data flows between the UPF and the DN.

It may be understood that the network elements or the functions may be network elements in a hardware device, may be software functions running on dedicated hardware, or may be virtualization functions instantiated on a platform (for example, a cloud platform). In a possible implementation, the network elements or the functions may be implemented by one device, may be jointly implemented by a plurality of devices, or may be one functional module in one device. This is not specifically limited in embodiments of this application.

The first network element in the solutions of this application may be a lower-layer network element in the foregoing network, for example, the foregoing application function AF network element and the foregoing UE, and may have local information and/or data. The second network element in the solutions of this application may be an upper-layer network element in the foregoing network architecture, for example, a CN or a RAN device, and may have global information and/or data in the network.

In addition, an embodiment of this application further provides a schematic of an architecture of a communication system to which a communication method is applicable. As shown in FIG. 3, the communication system includes base stations, a core network, and a plurality of terminal devices UEs. The base stations are all connected to the core network device, and the plurality of base stations are separately connected to the plurality of terminal devices. Embodiments of this application are applicable to both a homogeneous network scenario and a heterogeneous network scenario, and a transmission point is not limited. Embodiments of this application may be applied to coordinated multipoint transmission between macro base stations, between micro base stations, and between a macro base station and a micro base station, and are applicable to both a frequency division duplexing (frequency division duplexing, FDD) system and a time division duplexing (time division duplexing, TDD) system. Embodiments of the present invention are applicable to both a low-frequency scenario (sub 6 GHz) and a high-frequency scenario (above 6 GHz), terahertz, optical communication, or the like.

The first network element in the solutions of this application may be the UEs in FIG. 3, and may have local local information and/or data. The second network element in the solutions of this application may be the base stations in FIG. 3, and may have global information and/or data in a network. Alternatively, the first network element in the solutions of this application may be the base stations in FIG. 3, and the second network element in the solutions of this application may be the core network in FIG. 3.

Therefore, types and physical forms of the first network element and the second network element are not specifically limited in this application, provided that the second network element has data that is more global and comprehensive than data of the first network element.

The technical solutions of this application are described below with reference to specific embodiments.

An embodiment of this application provides a communication method. The method may be applied to but is not limited to the network architecture shown in FIG. 2 and the communication system shown in FIG. 3. The method may be performed by a network element in this application, or may be performed by a chip corresponding to the network element in this application. The network element in this application may be a physical entity network element, or may be a virtual network element. A form of the network element in this application is not specifically limited.

In addition, in embodiments of this application, when the first network element is a network element having local data, and the second network element is a network element having global data, the first network element may alternatively be the foregoing terminal device (or a controller or a chip corresponding to the terminal device), and the second network element may be the foregoing access network device (or a controller or a chip corresponding to the access network device), for example, a base station. In addition, it should be noted that ordinal numbers such as "first" and "second" mentioned below are used to distinguish between a plurality of objects for ease of description, but are not used to limit a sequence, a time sequence, a priority, or an importance degree of the plurality of objects. Specific forms of the first network element and the second network element performing the embodiments are not limited in this application.

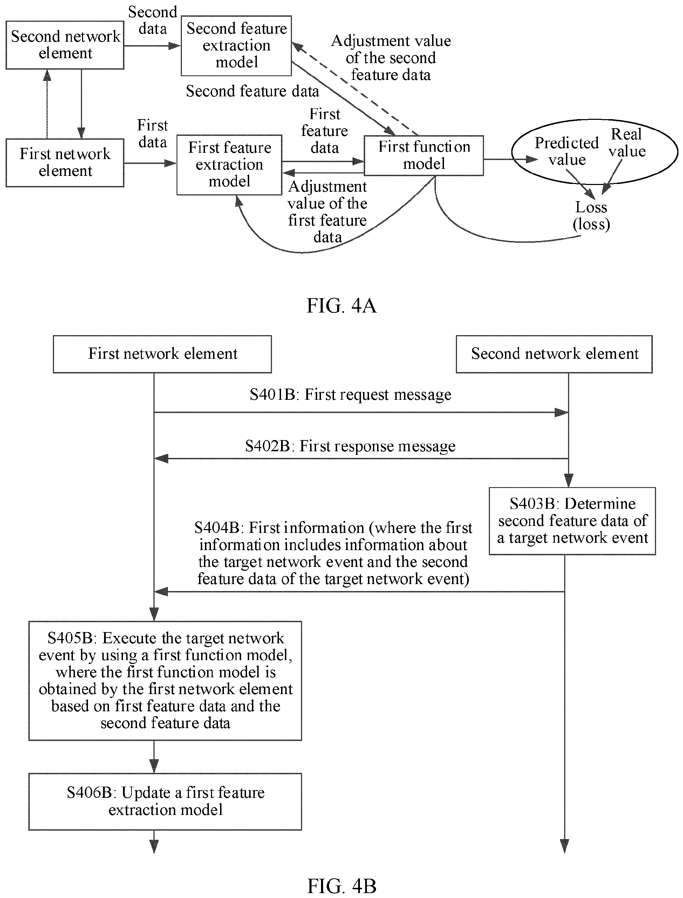

FIG. 4A shows a structure for performing the communication method according to an embodiment of this application. FIG. 4B shows a procedure of a communication method according to an embodiment of this application. With reference to FIG. 4A and FIG. 4B, the method may specifically include the following steps.

S401B: A first network element sends a first request message to a second network element, where the first request message is used to request second feature data of a target network event.

Correspondingly, the second network element receives the first request message.

In the solution of this application, the first network element is a lower-layer network element, or a network element that needs to obtain assistance data from the second network element to obtain a first function model. The second network element is an upper-layer network element, or is a network element that provides global feature data for the first network element, to assist the first network element in obtaining a function model.

In an implementation, the first request message includes information about the target network event, and the information about the target network event includes identification information of the target network event, and further includes one or more of a target dimension, a response delay, data accuracy, and quality of service QoS of the target network event in feature data of the target network event.

It should be noted that the target network event may be several types of network events explicitly defined in a protocol, for example, load balancing and energy saving. The target network event may alternatively be an event pre-agreed between network elements (for example, the first network element and the second network element) in a network, provided that the second network element in the network can identify the target network event after receiving the first request message. Therefore, the target network event is not specifically limited in this application.

S402B: The second network element sends a first response message to the first network element.

Correspondingly, the first network element receives the first response message.

After receiving the first request message of the first network element, the second network element needs to determine whether to accept or reject the request, that is, whether to receive or reject to provide the second feature data of the target network element event to the first network element. If it is determined to accept the request, the following step S403B is performed; or if it is determined to reject the request, none of the following steps is performed.

For example, that the second network element determines whether to accept or reject the request may include but is not limited to the following reasons:
The second network element determines, based on the information about the target network event in the first request message, that the second network element may accept the request if the local data of the second network element includes the data related to the target network event; or that the second network element may reject the request if the local data of the second network element does not include the data related to the target network event.

Alternatively, when the second network element allows another network element to access or obtain local feature data, the second network element may determine to accept the foregoing request; or if the second network element does not allow another network element to access or obtain local feature data, the second network element may determine to reject the foregoing request. Alternatively, if the second network element can transmit the second feature data requested by the first network element, the second network element determines to accept the request; or if the second network element cannot transmit the second feature data requested by the first network element, the second network element rejects the request.

Therefore, a reason why the second network element accepts or rejects the first request message of the first network element is not specifically limited in this application.

After the second network element rejects the first request message, the first network element may obtain the following first function model based on local feature data, or the first network element sends a first request message to the second network element again after a period of time.

In an implementation, the second network element sends the first response message to the first network element, and the first network element receives the first response message. The first response message is used to notify the first network element that the second network element provides the second feature data of the target network event. In this implementation, the second network element continues to perform the following step S403B.

In another implementation, the second network element sends the first response message to the first network element, and the first network element receives the first response message. The first response message is used to notify the first network element that the second network element does not provide the second feature data of the target network event. However, in this implementation, the second network element does not continue to perform the following step S403B and any subsequent step.

S403B: The second network element determines the second feature data of the target network event.

In an implementation, that the second network element determines the second feature data of the target network event includes: The second network element obtains a second dataset of the target network event; and the second network element performs feature extraction on the second dataset by using a second feature extraction model, to obtain the second feature data, where the second feature extraction model is used by the second network element to extract feature data of the target network event.

In addition, the first network element also determines first feature data of the target network event.

It should be noted that the first network element may determine the first feature data of the target network event before the step S403B, or simultaneously with the step S403B, or simultaneously with the following step S404B, or after the following step S404B. Therefore, in comparison with the foregoing step S403B and the following step S404B, an execution sequence of determining the first feature data of the target network event by the first network element is not specifically limited in this application.

In an implementation, that the first network element determines first feature data of the target network event includes: The first network element obtains a first dataset of the target network event; and the first network element performs feature extraction on the first dataset by using a first feature extraction model, to obtain the first feature data, where the first feature extraction model is used by the first network element to extract feature data of the target network event.

S404B: The second network element sends first information to the first network element, where the first information includes the information about the target network event and the second feature data of the target network event.

In an implementation, the first information further includes the first response message, and the first response message is used to notify the first network element that the second network element provides the second feature data of the target network event. In this implementation, an additional resource overhead and delay generated when the first network element separately transmits the first response message and the first information to the first network element are avoided.

In an implementation, the first information further includes a first indication, and the first indication indicates the first network element whether to return an adjustment amount of the second feature data.

If the first indication indicates the first network element to return the adjustment amount of the second feature data, after determining the adjustment amount of the second feature data, the first network element needs to send the adjustment amount of the second feature data to the second network element. If the first indication indicates the first network element not to return the adjustment amount of the second feature data, the first network element does not need to send the adjustment amount of the second feature data to the second network element.

It should be noted that, if the second feature extraction model of the second network element is already mature (that is, accuracy is very high), or the second network element does not allow a local feature extraction model to be changed, the first indication indicates the first network element not to return the adjustment amount of the second feature data. If the second feature extraction model of the second network element is immature (that is, accuracy is low), or the second network element allows a local feature extraction model to be changed, the first indication indicates the first network element to return the adjustment amount of the second feature data.

S405B: The first network element executes the target network event by using the first function model, where the first function model is obtained by the first network element based on the first feature data and the second feature data.

In an implementation, the first network element performs feature combination on the first feature data and the second feature data, and uses feature data obtained through the feature combination as an input of a function model, to obtain the first function model.

In this implementation, the first network element can more accurately execute the target network event by using the first function model. The first function model may be, but is not limited to, a prediction model, a regression model, a classification model, or a clustering model. The first function model is not specifically limited in the solution of this application, and may be obtained based on an actual requirement.

S406B: The first network element updates the first feature extraction model.

In an implementation, when the step S406B is performed, the following steps may be included.

The first network element determines an adjustment amount of the first feature data.

The first network element updates the first feature extraction model based on the adjustment amount of the first feature data.

In an implementation, that the first network element determines an adjustment amount of the first feature data includes: The first network element obtains sample data of the target network event, where the sample data includes a feature data sample of the first network element and a real value of the target network event; the first network element inputs the feature data sample of the first network element into the first function model, to obtain an output value of the target network event; and the first network element obtains the adjustment amount of the first feature data based on the output value of the target network event and the real value of the target network event. The adjustment amount of the first feature data is used to adjust an output layer of the first feature extraction model of the first network element.

In an implementation, when the first indication in the first information indicates the first network element to return the adjustment amount of the second feature data, the method further includes: The first network element sends the adjustment amount of the second feature data to the second network element according to the first indication.

In an implementation, that the first network element determines the adjustment amount of the second feature data includes: The first network element obtains sample data of the target network event, where the sample data includes a feature data sample and a real value of the target network event; the first network element inputs the feature data sample into the first function model, to obtain an output value of the target network event; and the first network element obtains the adjustment amount of the second feature data based on the output value of the target network event and the real value of the target network event. The adjustment amount of the second feature data is used to adjust an output layer of the second feature extraction model of the second network element.

In the solution of this application, the first network element sends the first request message to the second network element, where the first request message is used to request the second feature data of the target network event. Then, after the first network element determines the first feature data of the target network event and receives the first information, the first network element may obtain the first function model based on the first feature data and the second feature data in the first information, and the first network element executes the target network event by using the first function model. In this solution, when data privacy security of the second network element is ensured, the second feature data of the second network element may be obtained, and the first function model is obtained by combining the first feature data of the first network element, so that accuracy of executing the target network event by using the first function model can further be improved.

In the following several specific embodiments, for different target network events, a communication method provided in the foregoing solution of this application is further described in detail.

### Embodiment 1

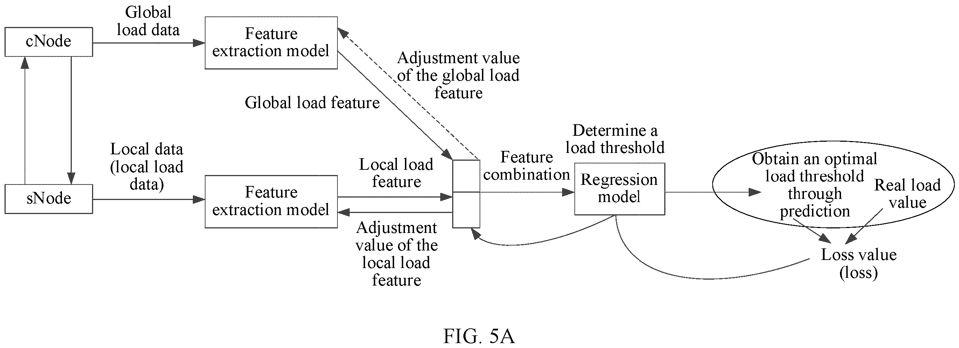

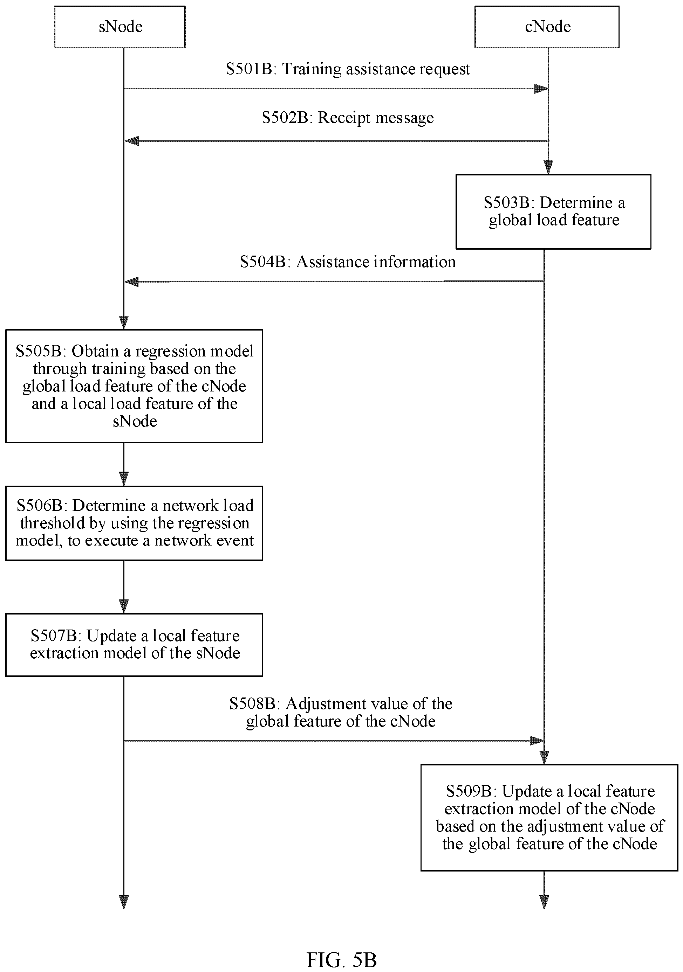

In Embodiment 1, as shown in FIG. 5A, network load balancing is used as an example of the target network event, and a node sNode (equivalent to the first network element in the solution of this application, such as a lower-layer network element) has or stores regional local load data, for example, local data and/or information, a service volume of an accessed user, and user distribution. In addition, the node sNode needs to obtain a regression model through training, and the regression model is used to determine a load threshold. A node cNode (equivalent to the second network element in the foregoing solution of this application, such as an upper-layer network element) has or stores regional global load data, for example, load data and/or information of a regional base station, and a service inflow and/or outflow volume. The node cNode may assist the node sNode in adjusting the load threshold, to obtain an optimal load threshold. As shown in FIG. 5B, a specific procedure of the method in this embodiment is as follows.

S501B: An sNode sends a training assistance request to a cNode.

Correspondingly, the cNode receives the training assistance request (equivalent to the first request message in the foregoing solution of this application) from the sNode, and the training assistance request is used to request the cNode to provide a global load feature (equivalent to the second feature data in the foregoing solution of this application).

The training assistance request includes information about network load, and the information about the network load includes a load balance (load balance, LB) and a hidden feature parameter, for example, a dimension (equivalent to the information about the target network event in the foregoing solution of this application).

S502B: The cNode sends a receipt message to the sNode.

Correspondingly, the sNode receives the receipt message (equivalent to the first response message in the foregoing solution of this application).

If the cNode determines to accept the training assistance request, the receipt message is used to notify the sNode that the cNode rejects the training assistance request, and the cNode continues to perform the following step S503B.

If the cNode determines to reject the training assistance request, the receipt message is used to notify the sNode that the cNode rejects the training assistance request, and the cNode does not continue to perform any of the following steps. In this case, the sNode may obtain a regression model through training based only on local local load data, or the sNode sends a training assistance request to the cNode again after waiting for a period of time.

S503B: The cNode determines a global load feature.

For example, when the cNode determines the global load feature, the following may be included: The cNode first collects global data, for example, load data of a regional base station, service inflow and/or outflow data, and the like; and then the cNode performs extraction on the global data by using a local feature extraction model (equivalent to the second feature extraction model in the foregoing solutions of this application), to obtain the global load feature (equivalent to the second feature data in the foregoing solution of this application).

In addition, the sNode may also determine a local load feature with reference to the manner of determining the global load feature by the cNode in the step S503B.

For example, when the sNode determines the local load feature, the following may be included: The sNode first collects local local data, for example, local data and/or information, a service volume of an accessed user, user distribution, and the like; and then the sNode performs extraction on the local data by using a local feature extraction model (equivalent to the first feature extraction model in the foregoing solution of this application), to obtain the local load feature (equivalent to the first feature data in the foregoing solution of this application).

S504B: The cNode sends assistance information to the sNode.

Correspondingly, the sNode receives the assistance information (equivalent to the first information in the foregoing solution of this application), where the assistance information includes the global load feature of the cNode and the information about the network load.

In an implementation, if the cNode accepts the training assistance request of the sNode, the assistance information may include the foregoing receipt message, and the cNode does not need to separately send the foregoing receipt message and the assistance information to the sNode, thereby reducing an additional resource overhead and delay.

In an implementation, the first assistance information further includes first indication information, and the first indication information indicates the sNode whether to return an adjustment amount of the global load feature of the cNode.

For example, if the cNode determines that the local feature extraction model (equivalent to the second feature extraction model in the solution of this application) does not need to be changed or adjusted, the first indication information indicates the sNode not to return the adjustment amount of the global load feature of the cNode. If the cNode determines that the local feature extraction model needs to be changed or adjusted, the first indication information indicates the sNode to return the adjustment amount of the global load feature of the cNode.

S505B: The sNode obtains a regression model through training based on the local load feature of the sNode and the global load feature of the cNode.

For example, the sNode performs feature combination based on the global load feature of the cNode in the assistance information and the local load feature of the sNode, and uses combined feature data as input data of a training model, to obtain the regression model (equivalent to the first function model in the foregoing solution of this application), where the regression model is used to determine a network load threshold.

For example, the global load feature of the cNode is feature data of three dimensions, and the local load feature of the sNode is feature data of two dimensions. If there is no same dimension between the three dimensions corresponding to the cNode and the two dimensions corresponding to the sNode, feature combination may be performed in series on the global load feature of the cNode and the local load feature of the sNode, to obtain load feature data obtained through feature combination. If there is a same dimension between the three dimensions corresponding to the cNode and the two dimensions corresponding to the sNode, feature combination may be performed in a merging manner on data of a same dimension in the global load feature of the cNode and the local load feature of the sNode.

S506B: The sNode determines a network load threshold by using the regression model, to execute a network event.

For example, the sNode obtains sample data of the network load, where the sample data includes a feature data sample, inputs the feature data sample into the regression model, obtains an optimal load threshold through prediction, and executes the network event based on the optimal load threshold.

S507B: The sNode updates the local feature extraction model of the sNode.

For example, as shown in FIG. 5A, the sNode may use, as an adjustment value of the local load feature of the sNode, a loss value between the optimal load threshold obtained by using the regression model through prediction and a real load threshold. Further, the sNode adjusts the local feature extraction model of the sNode based on the adjustment value of the local load feature of the sNode, to obtain an updated local feature extraction model.

The updated local feature extraction model may be used for function model training in a next round. Refer to the foregoing steps S501B to S507B. Details are not described herein again.

S508B: The sNode sends the adjustment value of the global load feature of the cNode to the cNode.

If the first assistance information includes the first indication information indicating the sNode to return the adjustment value of the global load feature of the cNode, the sNode uses the loss value (loss) between the optimal load threshold obtained by using the regression model through prediction and the real load threshold as the adjustment value of the global load feature of the cNode, and sends the adjustment value of the global feature data of the cNode to the cNode.

S509B: The cNode updates the local feature extraction model of the cNode based on the adjustment value of the global load feature of the cNode.

The steps S508B and S509B are optional steps.

According to Embodiment 1, network load balancing is used as an example of the target network event. An sNode that needs to predict a load threshold may request a cNode to provide a global load feature, and feature combination may be performed on the global load feature provided by the cNode and a local network load feature of the sNode, to assist the sNode in training to obtain an accurate regression model, so as to obtain an optimal load threshold through prediction. In addition, the sNode may further update a local feature extraction model based on the optimal load threshold and a real load threshold. In addition, when the cNode indicates the sNode to return an adjustment value of the global load feature, the sNode may further return the adjustment value of the global load feature to the cNode, so that the cNode can update a local feature extraction model based on the adjustment value of the global load feature, to ensure higher accuracy of data feature extraction in a next round.

### Embodiment 2

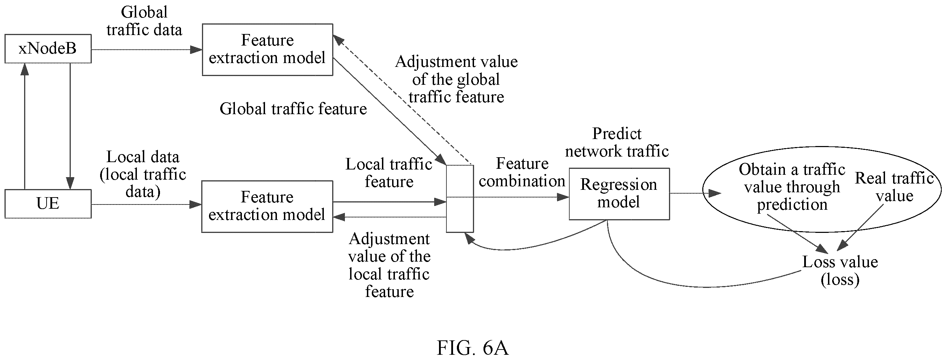

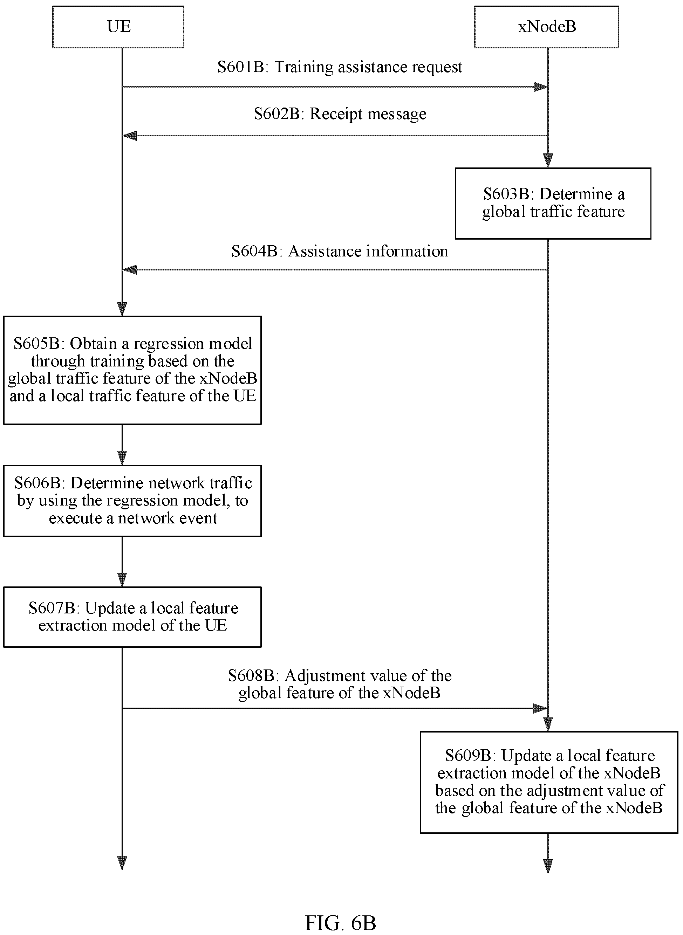

In Embodiment 2, as shown in FIG. 6A, network traffic is used as an example of the target network event, and a UE (equivalent to a first network element in the solution of this application, such as a lower-layer network element) has or stores local local traffic data, such as channel state information (channel state information, CSI), a traffic type, and a service type. The UE needs to obtain a regression model through training, and the regression model is used to predict network traffic. A base station xNodeB (equivalent to the second network element in the foregoing solution of this application, such as an upper-layer network element) has or stores global traffic data, for example, load information of a base station, and a service inflow and/or outflow volume. The base station xNodeB may assist the UE in predicting traffic. As shown in FIG. 6B, a specific procedure of the method in this embodiment is as follows.

S601B: A UE sends a training assistance request to an xNodeB.

Correspondingly, the xNodeB receives the training assistance request (equivalent to the first request message in the foregoing solution of this application) from the UE, and the training assistance request is used to request the xNodeB to provide a global load feature (equivalent to the second feature data in the foregoing solution of this application).

The training assistance request includes information about network traffic, and the information about the network traffic includes traffic prediction and a hidden feature parameter, for example, a dimension (equivalent to the information about the target network event in the foregoing solution of this application).

S602B: The xNodeB sends a receipt message to the UE.

Correspondingly, the UE receives the receipt message (equivalent to the first response message in the foregoing solution of this application).

If the xNodeB determines to accept the training assistance request, the receipt message is used to notify the UE that the xNodeB accepts the training assistance request, and the xNodeB continues to perform the following step S603B.

If the cxNodeB determines to reject the training assistance request, the receipt message is used to notify the UE that the xNodeB rejects the training assistance request, and the xNodeB does not continue to perform any of the following steps. In this case, the UE may obtain a regression model through training based only on local local traffic data, or the UE sends a training assistance request to the xNodeB again after waiting for a period of time.

S603B: The xNodeB determines a global traffic feature.

For example, when the xNodeB determines the global traffic feature, the following may be included: The xNodeB first collects global data, for example, procedure data of a regional base station, a service inflow and/or outflow volume, and the like; and then the xNodeB performs extraction on the global data by using a local feature extraction model (equivalent to the second feature extraction model in the foregoing solution of this application), to obtain the global traffic feature (equivalent to the second feature data in the foregoing solution of this application).

In addition, the UE may also determine a local traffic feature with reference to the manner of determining the global traffic feature by the xNodeB in the step S603B.

For example, when the UE determines the local load feature, the following may be included: The UE first collects local local data, for example, CSI, historical traffic, a service type, and the like; and then the UE performs extraction on the local data by using a local feature extraction model (equivalent to the first feature extraction model in the foregoing solution of this application), to obtain the local traffic feature (equivalent to the first feature data in the foregoing solution of this application).

S604B: The xNodeB sends assistance information to the UE.

Correspondingly, the UE receives the assistance information (equivalent to the first information in the foregoing solution of this application), where the assistance information includes the global traffic feature of the xNodeB and the information about the network traffic.

In an implementation, if the xNodeB accepts the training assistance request of the UE, the assistance information may include the foregoing receipt message, and the xNodeB does not need to separately send the foregoing receipt message and the assistance information to the UE, thereby reducing an additional resource overhead and delay.

In an implementation, the first assistance information further includes first indication information, and the first indication information indicates the UE whether to return an adjustment amount of the global traffic feature of the xNodeB.

For example, if the xNodeB determines that the local feature extraction model (equivalent to the second feature extraction model in the solution of this application) does not need to be changed or adjusted, the first indication information indicates the UE not to return the adjustment amount of the global traffic feature of the xNodeB. If the xNodeB determines that the local feature extraction model needs to be changed or adjusted, the first indication information indicates the UE to return the adjustment amount of the global traffic feature of the xNodeB.

S605B: The UE obtains a regression model through training based on the local traffic feature of the UE and the global traffic feature of the xNodeB.

For example, the UE performs feature combination based on the global traffic feature of the xNodeB in the assistance information and the local traffic feature of the UE, and uses a combined feature as input data of a training model, to obtain the regression model (equivalent to the first function model in the foregoing solution of this application), where the regression model is used to predict network traffic.

For example, the global traffic feature of the xNodeB is feature data of three dimensions, and the local traffic feature of the UE is feature data of two dimensions. If there is no same dimension between the three dimensions corresponding to the xNodeB and the two dimensions corresponding to the UE, feature combination may be performed in series on the global traffic feature of the xNodeB and the local traffic feature of the UE, to obtain a traffic feature obtained through feature combination. If there is a same dimension between the three dimensions corresponding to the xNodeB and the two dimensions corresponding to the UE, feature combination may be performed in a merging manner on features of a same dimension in the global traffic feature of the xNodeB and the local traffic feature of the UE.

S606B: The UE determines network traffic by using the regression model, to execute a network event.

For example, the UE obtains sample data of the network traffic, where the sample data includes a feature data sample, inputs the feature data sample into the regression model, obtains a traffic value through prediction, and executes the network event based on the predicted traffic value.

S607B: The UE updates the local feature extraction model of the UE.

For example, as shown in FIG. 6A, the UE may use, as an adjustment value of the local traffic feature of the UE, a loss value between the traffic value obtained by using the regression model through prediction and a real traffic value. Further, the UE adjusts the local feature extraction model of the sNode based on the adjustment value of the local traffic feature of the UE, to obtain an updated local feature extraction model.

The updated local feature extraction model may be used for function model training in a next round. Refer to the foregoing steps S601B to S607B. Details are not described herein again.

S608B: The UE sends the adjustment value of the global feature of the xNodeB to the xNodeB.

If the first assistance information includes the first indication information indicating the UE to return the adjustment value of the global traffic feature of the xNodeB, the UE uses the loss value (loss) between the traffic value obtained by using the regression model through prediction and the real traffic value as the adjustment value of the global feature of the xNodeB, and sends the adjustment value of the global feature of the xNodeB to the xNodeB.

S609B: The xNodeB updates the local feature extraction model of the xNodeB based on the adjustment value of the global feature of the xNodeB.

The steps S608B and S609B are optional steps.

According to Embodiment 2, network traffic is used as an example of the target network event. A UE that needs to predict a network traffic value may request an xNodeB to provide a global network traffic feature, and feature combination may be performed on the global network traffic feature provided by the xNodeB and a local network traffic feature of the UE, to assist the UE in training to obtain an accurate regression model, so as to obtain a traffic value through prediction. In addition, the UE may further update a local feature extraction model based on the predicted traffic value and a real traffic value. In addition, when the xNodeB indicates the UE to return an adjustment value of the global traffic feature, the UE may further return the adjustment value of the global traffic feature to the xNodeB, so that the xNodeB can update a local feature extraction model based on the adjustment value of the global traffic feature, to ensure higher accuracy of data feature extraction in a next round.

### Embodiment 3

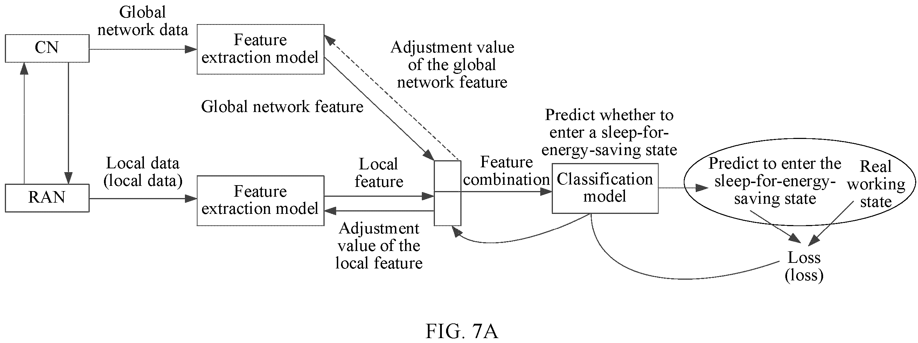

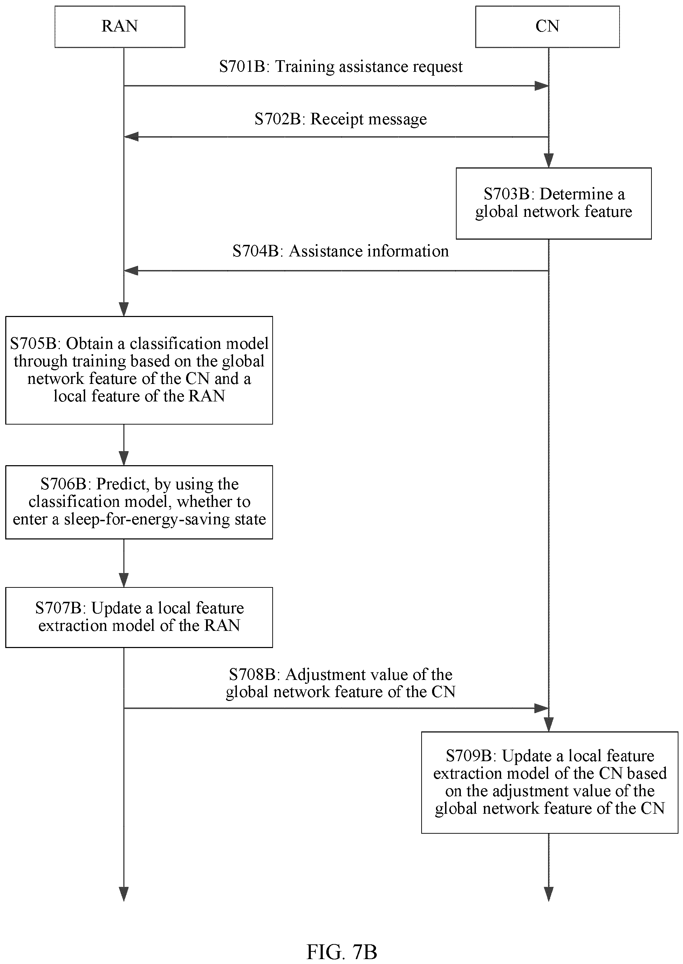

In Embodiment 3, as shown in FIG. 7A, sleep for energy saving is used as an example of the target network event. An access network RAN (equivalent to the first network element in the solution of this application, such as a lower-layer network element) has or stores local local data, for example, load, a busy/idle time period, user distribution information and/or data of the access network RAN (such as a base station), and the like. The RAN needs to obtain a classification model through training, and the classification model is used to predict a working state of the RAN (that is, whether the RAN enters a sleep-for-energy-saving state). A core network CN (equivalent to the second network element in the foregoing solution of this application, such as an upper-layer network element) has or stores global network data, for example, service data of a regional base station, user service traffic information and/or data, and the like, and the CN may assist the RAN in sleep-for-energy-saving state prediction. As shown in FIG. 7B, a specific procedure of the method in this embodiment is as follows.

S701B: A RAN sends a training assistance request to a CN.

Correspondingly, the CN receives the training assistance request (equivalent to the first request message in the foregoing solution of this application) from the RAN, and the training assistance request is used to request the CN to provide a global network feature (equivalent to the second feature data in the foregoing solution of this application).

The training assistance request includes sleep-for-energy-saving information, and the sleep-for-energy-saving information includes energy saving (energy conservation, EC) and a hidden feature parameter, for example, a dimension (equivalent to the information about the target network event in the foregoing solution of this application).

S702B: The CN sends a receipt message to the RAN.

Correspondingly, the RAN receives the receipt message (equivalent to the first response message in the foregoing solution of this application).

If the CN determines to accept the training assistance request of the RAN, the receipt message is used to notify the RAN that the CN accepts the training assistance request, and the CN continues to perform the following step S703B.

If the CN determines to reject the training assistance request of the RAN, the receipt message is used to notify the RAN that the CN rejects the training assistance request, and the CN does not continue to perform any of the following steps. In this case, the RAN may obtain a regression model through training based only on local load data, or the RAN sends a training assistance request to the CN again after waiting for a period of time.

S703B: The CN determines a global network feature.

For example, when the CN determines the global network feature, the following may be included: The CN first collects global network data, for example, a service status of a regional base station, service inflow and/or outflow information and/or data, and the like; and then the CN performs feature extraction on the global network data by using a local feature extraction model (equivalent to the second feature extraction model in the foregoing solution of this application), to obtain the global network feature (equivalent to the second feature data in the foregoing solution of this application).

In addition, the RAN may also determine a local feature with reference to the manner of determining the global network feature by the CN in the step S703B.

For example, when the RAN determines the local feature, the following may be included: The RAN first collects local local data, for example, load of a base station, a busy/idle time period, user distribution information and/or data, and the like; and then the RAN performs feature extraction on the local data by using a local feature extraction model (equivalent to the first feature extraction model in the foregoing solution of this application), to obtain the local feature (equivalent to the first feature data in the foregoing solution of this application).

S704B: The CN sends assistance information to the RAN.

Correspondingly, the RAN receives the assistance information (equivalent to the first information in the foregoing solution of this application), where the assistance information includes a global network feature of the CN and sleep-for-energy-saving information.

In an implementation, if the CN accepts the training assistance request of the RAN, the assistance information may include the foregoing receipt message, and the CN does not need to separately send the foregoing receipt message and the assistance information to the RAN, thereby reducing an additional resource overhead and delay.

In an implementation, the first assistance information further includes first indication information, and the first indication information indicates the RAN whether to return an adjustment amount of the global network feature of the CN.

For example, if the CN determines that the local feature extraction model (equivalent to the second feature extraction model in the solution of this application) does not need to be changed or adjusted, the first indication information indicates the RAN not to return the adjustment amount of the global network feature of the CN. If the CN determines that the local feature extraction model needs to be changed or adjusted, the first indication information indicates the RAN to return the adjustment amount of the global network feature of the CN.

S705B: The RAN obtains a classification model through training based on the local feature of the RAN and the global network feature of the CN.

For example, the RAN performs feature combination based on the global network feature of the CN in the assistance information and the local feature of the RAN, and uses a combined feature as input data of a training model, to obtain the classification model (equivalent to the first function model in the foregoing solution of this application), where the classification model is used to predict whether to enter the sleep-for-energy-saving state.

For example, the global feature of the CN is a feature of three dimensions, and the local feature of the RAN is a feature of two dimensions. If there is no same dimension between the three dimensions corresponding to the CN and the two dimensions corresponding to the RAN, feature combination may be performed in series on the global feature of the CN and the local feature of the RAN, to obtain a feature obtained through feature combination. If there is a same dimension between the three dimensions corresponding to the CN and the two dimensions corresponding to the RAN, feature combination may be performed in a merging manner on the global feature of the CN and the local feature of the RAN.

S706B: The RAN determines, by using the classification model, whether to enter a sleep-for-energy-saving state.

For example, the RAN obtains sample data of a network, where the sample data includes a feature sample, inputs the feature sample into the classification model, and predicts to enter the sleep-for-energy-saving state, so that the RAN enters the sleep-for-energy-saving state.

S707B: The RAN updates the local feature extraction model of the RAN.

For example, as shown in FIG. 7A, the RAN may adjust the local feature extraction model of the RAN based on a loss between the working state of the RAN obtained by using the classification model through prediction (for example, it is predicted that the RAN enters the sleep-for-energy-saving state) and a real working state of the RAN (for example, the RAN fails to enter the sleep-for-energy-saving state), to obtain an updated local feature extraction model.

The updated local feature extraction model of the RAN may be used for function model training in a next round. Refer to the foregoing steps S701B to S707B. Details are not described herein again.

S708B: The RAN sends the adjustment value of the global network feature of the CN to the CN.

If the first assistance information includes the first indication information indicating the RAN to return the adjustment value of the global network feature of the CN, the RAN sends the adjustment value of the global network feature of the CN to the CN, that is, the foregoing loss between the working state of the RAN obtained by using the classification model through prediction and the real working state of the RAN.

S709B: The CN updates the local feature extraction model of the CN based on the adjustment value of the global feature of the CN.

The CN updates the local feature extraction model of the CN based on the loss between the working state of the RAN obtained by using the classification model through prediction and the real working state of the RAN.

The steps S708B and S709B are optional steps.

According to Embodiment 3, sleep for energy saving is used as an example of the target network event. When a RAN needs to predict whether the RAN can enter a sleep-for-energy-saving state, the RAN may request a CN to provide a global network feature, and then the RAN performs feature combination on the global network feature provided by the CN and a local local feature of the RAN, to assist the RAN in training to obtain an accurate classification model. The classification model may be used to predict whether the RAN can enter the sleep-for-energy-saving state. In addition, the RAN may further update a local feature extraction model based on the predicted sleep-for-energy-saving state and a real working state. In addition, when the CN indicates the RAN to return an adjustment value of the global network feature, the RAN further returns the adjustment value of the global network feature, that is, a loss between the working state of the RAN obtained by using the classification model through prediction and the real working state of the RAN, to the CN, so that the CN can update a local feature extraction model based on the loss between the working state of the RAN obtained by using the classification model through prediction and the real working state of the RAN, to ensure higher accuracy of data feature extraction in a next round.

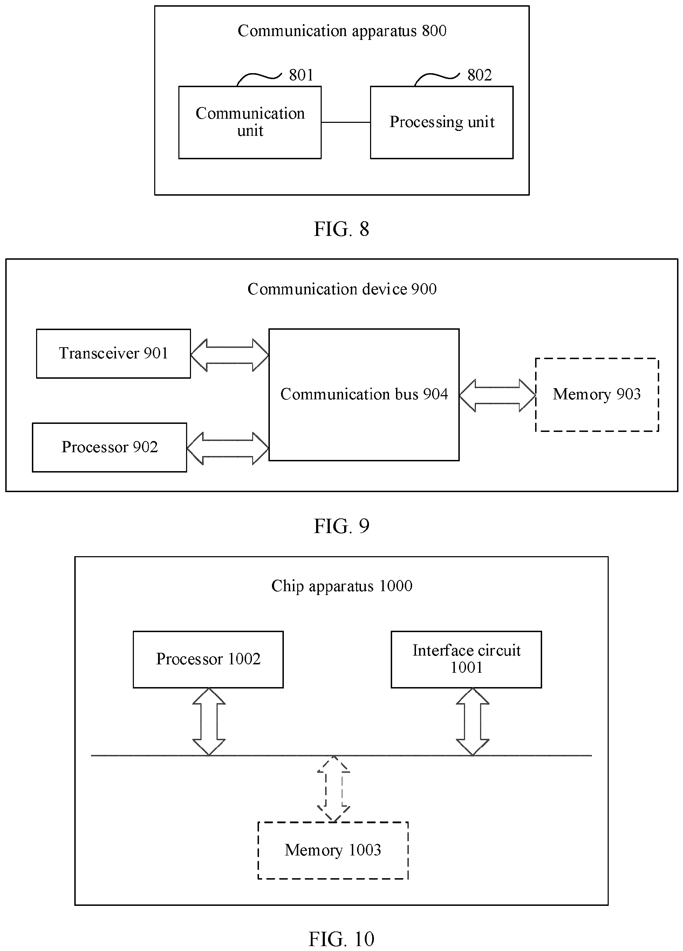

Based on a same technical concept, an embodiment of this application provides a communication apparatus. The communication apparatus may be configured to perform operations performed by the first network element in the foregoing method embodiment. Alternatively, the communication apparatus may be the first network element, a processor or a chip of the first network element. The communication apparatus includes a corresponding module or unit for performing the methods/operations/steps/actions described for the first network element in the foregoing embodiments. The module or unit may be a hardware circuit, or may be software, or may be implemented by a hardware circuit in combination with software. The communication apparatus may have a structure shown in FIG. 8.

As shown in FIG. 8, the apparatus 800 includes a communication unit 801 and a processing unit 802. The processing unit 802 is configured to determine first feature data of a target network event. The communication unit 801 is configured to receive first information from a second network element, where the first information includes information about the target network event and second feature data of the target network event. The processing unit 802 is further configured to execute the target network event by using a first function model, where the first function model is obtained based on the first feature data and the second feature data.

Optionally, the communication apparatus 800 may further include a storage unit (not shown in FIG. 8). The storage unit may be configured to store a computer program and/or instructions and/or information for performing the methods/operations/steps/actions described for the first network element.

In a possible implementation, the communication unit is further configured to: before receiving the first information from the second network element, send a first request message to the second network element, where the first request message is used to request the second feature data of the target network event.

In a possible implementation, the first request message includes the information about the target network event, and the information about the target network event includes identification information of the target network event, and further includes one or more of a target dimension, a response delay, data accuracy, and quality of service QoS of the target network event in feature data of the target network event.

In a possible implementation, the communication unit 801 is further configured to receive a first response message from the second network element, where the first response message is used to notify the first network element that the second network element provides the second feature data of the target network event.

In a possible implementation, the first information further includes the first response message.

In a possible implementation, when determining the first feature data of the target network event, the processing unit 802 is specifically configured to: obtain a first dataset of the target network event by using the communication unit 801; and perform feature extraction on the first dataset by using a first feature extraction model, to obtain the first feature data, where the first feature extraction model is used by the first network element to extract feature data of the target network event.

In a possible implementation, the first information further includes a first indication, and the first indication indicates the first network element whether to return an adjustment amount of the second feature data.

In a possible implementation, the processing unit 802 is further configured to: obtain sample data of the target network event by using the communication unit 801, where the sample data includes a feature data sample and a real value of the target network event; input the feature data sample into the first function model, to obtain an output value of the target network event; and obtain the adjustment amount of the second feature data based on the output value of the target network event and the real value of the target network event, where the adjustment amount of the second feature data is used to adjust an output layer of a second feature extraction model of the second network element.

In a possible implementation, when the first indication indicates the first network element to return the adjustment amount of the second feature data, the communication unit 801 is further configured to send the adjustment amount of the second feature data to the second network element according to the first indication.

Based on a same technical concept, an embodiment of this application provides a communication apparatus. The communication apparatus may be configured to perform operations performed by the second network element in the foregoing method embodiment. Alternatively, the communication apparatus may be the second network element, a processor or a chip of the second network element. The communication apparatus includes a corresponding module or unit for performing the methods/operations/steps/actions described for the second network element in the foregoing embodiments. The module or unit may be a hardware circuit, or may be software, or may be implemented by a hardware circuit in combination with software. The communication apparatus may also have a structure shown in FIG. 8.

As shown in FIG. 8, the apparatus 800 includes a communication unit 801 and a processing unit 802. The processing unit 802 is configured to determine second feature data of a target network event. The communication unit 801 is configured to send first information to a first network element, where the first information includes information about the target network event and the second feature data of the target network event.

Optionally, the communication apparatus 800 may further include a storage unit (not shown in FIG. 8). The storage unit may be configured to store a computer program and/or instructions and/or information for performing the methods/operations/steps/actions described for the second network element.

In a possible implementation, the communication unit 801 is further configured to: before the processing unit 802 determines the second feature data of the target network event, receive a first request message from the first network element, where the first request message is used to request the second feature data of the target network event.

In a possible implementation, the first request message includes the information about the target network event, and the information about the target network event includes identification information of the target network event, and further includes one or more of a target dimension, a response delay, data accuracy, and quality of service QoS of the target network event in feature data of the target network event.

In a possible implementation, the communication unit 801 is further configured to send a first response message to the first network element, where the first response message is used to notify the first network element that the second network element provides the second feature data of the target network event.

In a possible implementation, the first information further includes the first response message.

In a possible implementation, when determining the second feature data of the target network event, the processing unit 802 is specifically configured to: obtain a second dataset of the target network event by using the communication unit 801; and perform feature extraction on the second dataset by using a second feature extraction model, to obtain the second feature data, where the second feature extraction model is used by the second network element to extract feature data of the target network event.

In a possible implementation, the first information further includes a first indication, and the first indication indicates the first network element whether to return an adjustment amount of the second feature data.

In a possible implementation, when the first indication indicates the first network element to return the adjustment amount of the second feature data, the communication unit 801 is further configured to receive the adjustment amount of the second feature data from the first network element.

In a possible implementation, the processing unit 802 is further configured to adjust an output layer of the second feature extraction model of the second network element based on the adjustment amount of the second feature data.

Based on a same inventive concept, an embodiment of this application further provides a communication device. The communication device uses steps performed by the first network element in the methods provided in the embodiments corresponding to FIG. 4A and FIG. 4B, FIG. 5A and FIG. 5B, FIG. 6A and FIG. 6B, and FIG. 7A and FIG. 7B, and may be a device same as the communication apparatus 800 shown in FIG. 8. As shown in FIG. 9, the communication device 900 includes a transceiver 901, a processor 902, and a memory 903. The transceiver 901, the processor 902, and the memory 903 are connected through a bus 904, to implement data exchange. Optionally, the processor 902 and the memory 903 may be integrated together.

The communication line 904 may be a peripheral component interconnect (peripheral component interconnect, PCI for short) bus, an extended industry standard architecture (extended industry standard architecture, EISA for short) bus, or the like. The communication line 904 may be classified into an address bus, a data bus, a control bus, and the like. For ease of representation, only one bold line is used for representing the bus in FIG. 9, but this does not represent that there is only one bus or only one type of bus.

It should be understood that the transceiver 901 in the communication device 900 includes a sending and/or receiving function of the communication unit 801 in the communication apparatus 800. The transceiver 901 is configured to support the communication apparatus 800 in receiving and sending information, data, and the like with the second network element in the foregoing embodiments. The memory 903 is used for program code and data of the communication device 900. The processor 902 is configured to invoke program code and data stored in the memory 903, to perform a processing process of the first network element in the methods shown in FIG. 4A and FIG. 4B, FIG. 5A and FIG. 5B, FIG. 6A and FIG. 6B, and FIG. 7A and FIG. 7B, and/or another process of the technology described in this application.

In addition, the communication device 900 may further include other interfaces, such as an optical fiber link interface, an Ethernet interface, a microwave link interface, and a copper line interface, to implement interaction between the communication device 900 and the second network element.

Optionally, the processor 902 may be a central processing unit, an ASIC, an FPGA, or a CPLD.

It should be noted that the communication device 900 shown in FIG. 9 includes only one transceiver 901, one processor 902, and one memory 903. During actual implementation, there may be one or more transceivers 901, processors 902, and memories 903.

Similarly, it should be noted that the communication device 900 shown in FIG. 9 may also implement the methods performed by the second network element in the methods provided in the embodiments corresponding to FIG. 4A and FIG. 4B, FIG. 5A and FIG. 5B, FIG. 6A and FIG. 6B, and FIG. 7A and FIG. 7B. The communication device 900 shown in FIG. 9 may alternatively be a device same as the communication apparatus 800 shown in FIG. 8. Therefore, for an implementation that is not described in detail for the communication device 900, refer to related descriptions in the methods provided in the embodiments corresponding to FIG. 4A and FIG. 4B, FIG. 5A and FIG. 5B, FIG. 6A and FIG. 6B, and FIG. 7A and FIG. 7B, or refer to related descriptions for the communication device 900 shown in FIG. 9. Details are not described herein again.

FIG. 10 is a schematic of an apparatus structure of a chip according to an embodiment of this application. The chip 1000 includes an interface circuit 1001 and one or more processors 1002. Optionally, the chip 1000 may further include a bus.

The processor 1002 may be an integrated circuit chip, having a signal processing capability. During implementation, steps in the foregoing eye tracking method may be implemented by using a hardware integrated logic circuit in the processor 1002, or by using instructions in a form of software. The processor 1002 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 1002 may implement or perform the methods and steps that are disclosed in embodiments of this application. The general-purpose processor may be a microprocessor, or the processor may be any conventional processor or the like.

The interface circuit 1001 may be configured to send or receive data, instructions, or information. The processor 1002 may process data, instructions, or other information received through the interface circuit 1001, and send processed information through the interface circuit 1001.

Optionally, the chip further includes a memory 1003. The memory 1003 may include a read-only memory and a random access memory, and provide operation instructions and data for the processor. A part of the memory 1003 may further include a non-volatile random access memory (NVRAM).

Optionally, the memory stores an executable software module or a data structure, and the processor may perform a corresponding operation by invoking operation instructions (where the operation instructions may be stored in an operating system) stored in the memory.

Optionally, the chip may be used in the first network element in embodiments of this application. Optionally, the interface circuit 1001 may be configured to output an execution result of the processor 1002. For the communication method provided in one or more embodiments of this application, refer to the foregoing embodiments. Details are not described herein again.

It should be noted that functions corresponding to the interface circuit 1001 and the processor 1002 may be implemented by using a hardware design, or may be implemented by using a software design, or may be implemented by using a combination of software and hardware. This is not limited herein.

Based on a same concept as that in the foregoing method embodiment, an embodiment of this application further provides a computer-readable storage medium. The computer-readable storage medium stores some instructions. When the instructions are invoked and executed by a computer, the computer may be enabled to complete the foregoing method embodiments and the method in any one of the possible designs of the method embodiments. In this embodiment of this application, the computer-readable storage medium is not limited. For example, the computer-readable storage medium may be a RAM (network device random access memory, random access memory) or a ROM (read-only memory, read-only memory).

Based on a same concept as that in the foregoing method embodiment, this application further provides a computer program product. When the computer program product is invoked and executed by a computer, the method embodiment and the method in any one of the possible designs of the foregoing method embodiment may be implemented.

Based on a same concept as that in the foregoing method embodiment, this application further provides a chip. The chip may include a processor and an interface circuit, to complete the foregoing method embodiment and the method in any one of the possible implementations of the method embodiment. "Coupling" means that two components are joined directly or indirectly to each other, and the combination may be fixed or movable. Such combination may allow flowing liquid, electricity, electrical signal, or another type of signal to communicate between the two components.

It should be noted that "at least one" in embodiments of this application includes one or more, and "a plurality of" means two or more than two. In addition, it should be understood that in descriptions of this application, terms such as "first" and "second" are merely used for distinguishing the descriptions, but should not be understood as indicating or implying relative importance, or should not be understood as indicating or implying a sequence.

Terms used in the following embodiments are merely intended to describe specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" refers to one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects before and after the character.

Reference like "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", "in other embodiments", and the like that appear at different places in this specification do not necessarily mean referring to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

An embodiment of this application provides a computer-readable storage medium storing a computer program. The computer program includes instructions for performing the foregoing method embodiments.

An embodiment of this application provides a computer program product including instructions. When the instructions are executed on a computer, the computer is enabled to perform the foregoing method embodiments.

It should be noted that for ease and brevity of description, for explanations and beneficial effects of related content of any one of the communication apparatuses mentioned above, reference may be made to the corresponding communication method embodiments mentioned above. Details are not described herein again.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope defined by the following claims and their equivalent technologies.

## Claims

1. A communication method, comprising:
determining, by a first network element, first feature data of a target network event;
receiving, by the first network element, first information from a second network element, wherein the first information comprises information about the target network event and second feature data of the target network event; and
executing, by the first network element, the target network event by using a first function model, wherein the first function model is obtained by the first network element based on the first feature data and the second feature data.

2. The method according to claim 1, wherein before the receiving, by the first network element, first information from a second network element, the method further comprises:
sending, by the first network element, a first request message to the second network element, wherein the first request message is used to request the second feature data of the target network event.

3. The method according to claim 2, wherein the first request message comprises the information about the target network event, and the information about the target network event comprises identification information of the target network event, and further comprises one or more of a target dimension, a response delay, data accuracy, and quality of service QoS of the target network event in feature data of the target network event.

4. The method according to claim 2 or 3, wherein the method further comprises:
receiving, by the first network element, a first response message from the second network element, wherein the first response message is used to notify the first network element that the second network element provides the second feature data of the target network event.

5. The method according to claim 4, wherein the first information further comprises the first response message.

6. The method according to any one of claims 1 to 5, wherein the determining, by a first network element, first feature data of a target network event comprises:
obtaining, by the first network element, a first dataset of the target network event; and
performing, by the first network element, feature extraction on the first dataset by using a first feature extraction model, to obtain the first feature data, wherein the first feature extraction model is used by the first network element to extract feature data of the target network event.

7. The method according to any one of claims 1 to 6, wherein the first information further comprises a first indication, and the first indication indicates the first network element whether to return an adjustment amount of the second feature data.

8. The method according to any one of claims 1 to 7, wherein the method further comprises:
obtaining, by the first network element, sample data of the target network event, wherein the sample data comprises a feature data sample and a real value of the target network event;
inputting, by the first network element, the feature data sample into the first function model, to obtain an output value of the target network event; and
obtaining, by the first network element, the adjustment amount of the second feature data based on the output value of the target network event and the real value of the target network event, wherein the adjustment amount of the second feature data is used to adjust an output layer of a second feature extraction model of the second network element.

9. The method according to claim 7 or 8, wherein when the first indication indicates the first network element to return the adjustment amount of the second feature data, the method further comprises: sending, by the first network element, the adjustment amount of the second feature data to the second network element according to the first indication.

10. A communication method, comprising:
determining, by a second network element, second feature data of a target network event; and
sending, by the second network element, first information to a first network element, wherein the first information comprises information about the target network event and the second feature data of the target network event.

11. The method according to claim 10, wherein before the determining, by a second network element, second feature data of a target network event, the method further comprises:
receiving, by the second network element, a first request message from the first network element, wherein the first request message is used to request the second feature data of the target network event.

12. The method according to claim 11, wherein the first request message comprises the information about the target network event, and the information about the target network event comprises identification information of the target network event, and further comprises one or more of a target dimension, a response delay, data accuracy, and quality of service QoS of the target network event in feature data of the target network event.

13. The method according to claim 11 or 12, wherein the method further comprises:
sending, by the second network element, a first response message to the first network element, wherein the first response message is used to notify the first network element that the second network element provides the second feature data of the target network event.

14. The method according to claim 13, wherein the first information further comprises the first response message.

15. The method according to any one of claims 10 to 14, wherein the determining, by a second network element, second feature data of a target network event comprises:
obtaining, by the second network element, a second dataset of the target network event; and
performing, by the second network element, feature extraction on the second dataset by using a second feature extraction model, to obtain the second feature data, wherein the second feature extraction model is used by the second network element to extract feature data of the target network event.

16. The method according to any one of claims 10 to 15, wherein the first information further comprises a first indication, and the first indication indicates the first network element whether to return an adjustment amount of the second feature data.

17. The method according to claim 16, wherein when the first indication indicates the first network element to return the adjustment amount of the second feature data, the method further comprises:
receiving, by the second network element, the adjustment amount of the second feature data from the first network element.

18. The method according to claim 17, wherein the method further comprises:
adjusting, by the second network element, an output layer of the second feature extraction model of the second network element based on the adjustment amount of the second feature data.

19. A communication apparatus, comprising a communication unit and a processing unit, wherein
the processing unit is configured to determine first feature data of a target network event;
the communication unit is configured to receive first information from a second network element, wherein the first information comprises information about the target network event and second feature data of the target network event; and
the processing unit is configured to execute the target network event by using a first function model, wherein the first function model is obtained based on the first feature data and the second feature data.

20. The apparatus according to claim 19, wherein before the receiving, by a first network element, first information from a second network element, the apparatus further comprises:
sending, by the first network element, a first request message to the second network element, wherein the first request message is used to request the second feature data of the target network event.

21. The apparatus according to claim 20, wherein the first request message comprises the information about the target network event, and the information about the target network event comprises identification information of the target network event, and further comprises one or more of a target dimension, a response delay, data accuracy, and quality of service QoS of the target network event in feature data of the target network event.

22. The apparatus according to claim 20 or 21, wherein the communication unit is further configured to receive a first response message from the second network element, wherein the first response message is used to notify the first network element that the second network element provides the second feature data of the target network event.

23. The apparatus according to claim 22, wherein the first information further comprises the first response message.

24. The apparatus according to any one of claims 19 to 23, wherein when determining the first feature data of the target network event, the processing unit is specifically configured to:
obtain a first dataset of the target network event by using the communication unit; and
perform feature extraction on the first dataset by using a first feature extraction model, to obtain the first feature data, wherein the first feature extraction model is used by the first network element to extract feature data of the target network event.

25. The apparatus according to any one of claims 19 to 24, wherein the first information further comprises a first indication, and the first indication indicates the first network element whether to return an adjustment amount of the second feature data.

26. The apparatus according to any one of claims 19 to 25, wherein the communication unit is further configured to obtain sample data of the target network event, wherein the sample data comprises a feature data sample and a real value of the target network event; and
the processing unit is further configured to: input the feature data sample into the first function model, to obtain an output value of the target network event; and obtain the adjustment amount of the second feature data based on the output value of the target network event and the real value of the target network event, wherein the adjustment amount of the second feature data is used to adjust an output layer of a second feature extraction model of the second network element.

27. The apparatus according to claim 25 or 26, wherein when the first indication indicates the first network element to return the adjustment amount of the second feature data, the communication unit is further configured to send the adjustment amount of the second feature data to the second network element according to the first indication.

28. A communication apparatus, comprising a communication unit and a processing unit, wherein
the processing unit is configured to determine second feature data of a target network event; and
the communication unit is configured to send first information to a first network element, wherein the first information comprises information about the target network event and the second feature data of the target network event.

29. The apparatus according to claim 28, wherein the communication unit is further configured to: before the processing unit determines the second feature data of the target network event, receive a first request message from the first network element, wherein the first request message is used to request the second feature data of the target network event.

30. The apparatus according to claim 29, wherein the first request message comprises the information about the target network event, and the information about the target network event comprises identification information of the target network event, and further comprises one or more of a target dimension, a response delay, data accuracy, and quality of service QoS of the target network event in feature data of the target network event.

31. The apparatus according to claim 29 or 30, wherein the communication unit is further configured to send a first response message to the first network element, wherein the first response message is used to notify the first network element that the second network element provides the second feature data of the target network event.

32. The apparatus according to claim 31, wherein the first information further comprises the first response message.

33. The apparatus according to any one of claims 28 to 32, wherein when determining the second feature data of the target network event, the processing unit is specifically configured to:
obtain a second dataset of the target network event by using the communication unit; and perform feature extraction on the second dataset by using a second feature extraction model, to obtain the second feature data, wherein the second feature extraction model is used by the second network element to extract feature data of the target network event.

34. The apparatus according to any one of claims 28 to 33, wherein the first information further comprises a first indication, and the first indication indicates the first network element whether to return an adjustment amount of the second feature data.

35. The apparatus according to claim 34, wherein when the first indication indicates the first network element to return the adjustment amount of the second feature data, the communication unit is further configured to receive the adjustment amount of the second feature data from the first network element.

36. The apparatus according to claim 35, wherein the processing unit is further configured to adjust an output layer of the second feature extraction model of the second network element based on the adjustment amount of the second feature data.

37. A communication apparatus, comprising a processor and an interface circuit, wherein the interface circuit is configured to receive a signal from another communication apparatus different from the communication apparatus and transmit the signal to the processor, or send a signal from the processor to another communication apparatus different from the communication apparatus, and the processor is configured to implement the method according to any one of claims 1 to 9 or the method according to any one of claims 10 to 18 through a logic circuit or by executing code instructions.

38. A computer program product, comprising a computer program, wherein when the computer program is executed by a communication apparatus, the method according to any one of claims 1 to 18 is implemented.

39. A computer-readable storage medium, wherein the storage medium stores a computer-readable program or instructions; and when the computer program or the instructions are executed by a communication apparatus, the method according to any one of claims 1 to 18 is implemented.

40. A communication system, comprising a first network element configured to perform the method according to any one of claims 1 to 9 and a second network element configured to perform the method according to any one of claims 10 to 18.

41. A chip, wherein the chip is coupled to a memory, and the chip reads a computer program stored in the memory, to perform the method according to any one of claims 1 to 18.
